# EUROPÄISCHE PATENTSCHRIFT

(11) **EP 1 122 042 B1**
(45) Veröffentlichungstag und Bekanntmachung des Hinweises auf die Patenterteilung: **20.12.2006**
(21) Anmeldenummer: 01101431.3
(22) Anmeldetag: 23.01.2001
(51) Int. Cl.: B27F 1/04, B27C 5/02, B23Q 35/10

(54) **Verfahren zum Fräsen einer Nut in ein plattenförmiges Werkstück sowie Bearbeitungsmaschine zur Durchführung des Verfahrens**
Method and device for milling a groove in a plate-shaped workpiece
Procédé et appareil pour fraiser une rainure dans un élément sous forme de plaque

(30) Priorität: 02.02.2000 DE 10004470
(43) Veröffentlichungstag der Anmeldung: 08.08.2001
(73) Patentinhaber: REICH SPEZIALMASCHINEN GmbH, 72622 Nürtingen (DE)
(72) Erfinder: Lorber, Denis, 72663 Grossbettlingen (DE); Maiero, Fritz, 72636 Frickenhausen (DE)
(74) Vertreter: Hoeger, Stellrecht & Partner Patentanwälte

(56) Entgegenhaltungen:
- DE-A1- 2 523 450
- US-A- 3 230 835
- US-A- 3 388 414
- US-A- 5 934 346

## Beschreibung

Die Erfindung betrifft ein Verfahren zum Fräsen einer Nut in ein plattenförmiges Werkstück mittels einer Bearbeitungsmaschine, wobei man das Werkstück zu dessen Halterung in einer Bearbeitungsebene auf einen im wesentlichen horizontal ausgerichteten Auflagetisch der Bearbeitungsmaschine auflegt und wobei man ein an einem Bearbeitungskopf der Bearbeitungsmaschine gehaltenes Fräsaggregat verfährt und hierbei mittels einer um eine parallel zur Bearbeitungsebene ausgerichtete Antriebsachse rotierenden Frässcheibe eine Nut in das Werkstück einfräst (siehe beispielsweise US-A-3 388 414).

Die Erfindung betrifft außerdem eine Bearbeitungsmaschine zur Durchführung des Verfahrens mit einem Auflagetisch zur Halterung eines plattenförmigen Werkstücks in einer im wesentlichen horizontalen Bearbeitungsebene und mit einem parallel zur Bearbeitungsebene verfahrbaren Bearbeitungskopf, an dem ein Fräsaggregat gehalten ist, wobei das Fräsaggregat eine um eine parallel zur Bearbeitungsebene ausgerichtete Antriebsachse rotierbare Frässcheibe umfaßt zum Fräsen einer Nut in das Werkstück.

Bearbeitungsmaschinen zur horizontalen Bearbeitung plattenförmiger Werkstücke, insbesondere zur Bearbeitung von Holz- oder Kunststoff- oder Verbundplatten, ermöglichen es, mit hoher Reproduzierbarkeit innerhalb kurzer Zeit vorgegebene Nuten in das Werkstück einzubringen. Die Bearbeitungsmaschinen sind meist als computergesteuerte Bearbeitungszentren ausgebildet und umfassen einen Bearbeitungskopf, an dem mehrere Bearbeitungsaggregate, beispielsweise Bohr- und Fräsaggregate, gehalten sind. Hierbei können zum Fräsen V- oder U-förmiger Nuten Fräsaggregate mit einer Frässcheibe zum Einsatz kommen, die um eine parallel zur Bearbeitungsebene ausgerichtete Antriebsachse rotiert. Das Fräsaggregat wird hierbei in einem vorgebbaren Abstand zum zu bearbeitenden Werkstück gehalten und parallel zur Bearbeitungsebene rechnergesteuert verfahren.

Um auf diese Weise eine Nut mit gleichbleibender Nuttiefe anbringen zu können, ist es erforderlich, daß die der Frässcheibe zugewandte Oberseite des zu bearbeitenden Werkstücks exakt parallel zur Vorschubrichtung der Frässcheibe ausgerichtet ist. Zu diesem Zweck wurden bei herkömmlichen Bearbeitungsmaschinen große Anstrengungen unternommen, um den Auflagetisch und die Vorschubrichtung des Bearbeitungskopfes und der Frässcheibe exakt parallel zueinander auszurichten. Es hat sich allerdings gezeigt, daß trotz einer derartigen Ausrichtung nicht in allen Fällen Nuten mit in Vorschubrichtung gleichbleibender Nuttiefe in plattenförmige Werkstücke eingefräst werden können.

Aufgabe der vorliegenden Erfindung ist es, ein Verfahren der eingangs genannten Art bereitzustellen, das das präzisere Fräsen einer Nut mit definierter Nuttiefe in ein plattenförmiges Werkstück ermöglicht.

Diese Aufgabe wird bei einem gattungsgemäßen Verfahren erfindungsgemäß dadurch gelöst, daß man das Fräsaggregat mittels einer der Frässcheibe zugeordneten, auf dem Werkstück abrollbaren Tastrolle senkrecht zur Bearbeitungsrichtung führt. Bei einer derartigen Vorgehensweise wird der Abstand des Fräsaggregats zum Werkstück quer zur Bearbeitungsebene durch die auf der dem Fräsaggregat abgewandten Oberseite des Werkstücks abrollende Tastrolle definiert. Zu diesem Zweck ist das Fräsaggregat quer zur Bearbeitungsebene verschiebbar am Bearbeitungskopf gehalten, das heißt sein Abstand zur Bearbeitungsebene wird nicht starr vorgegeben sondern ist von der Positionierung der Tastrolle und somit dem Verlauf der Oberseite des zu bearbeitenden Werkstücks abhängig. Etwaige Unparallelitäten zwischen der Oberseite des Werkstücks und der Führung des Fräsaggregats können somit zuverlässig verhindert werden. Dies ermöglicht das hochpräzise Fräsen einer Nut mit definierter Nuttiefe, wie es insbesondere bei der Bearbeitung von Mehrschicht- oder Verbundplatten zum Tragen kommt, die nach dem Anbringen der Nut verformt werden sollen. Mehrschichtplatten umfassen hierbei üblicherweise eine Mittelschicht aus einem nur schwer biegbaren, d.h. nur mit großem Biegeradius biegbaren Kunststoff oder einem Material auf mineralischer Basis, die auf ihrer Ober- und ihrer Unterseite von einer biegefähigen, meist metallischen Deckschicht überdeckt ist. Derartige Mehrschichtplatten lassen sich auf einfache Weise "von Hand" abkanten, indem längs der Biegekante zunächst mittels eines Fromfräsers eine V-förmige oder rechteckförmige Nut ausgefräst wird, wobei nach dem Anbringen der Nut lediglich ein sehr geringer Materialrest mit einer Dicke von beispielsweise 0,8 ± 0,1 mm stehen bleibt. Anschließend kann die Mehrschichtplatte von Hand abgekantet werden, ohne daß hierzu eine Biegebank oder dergleichen erforderlich ist. Voraussetzung hierfür ist allerdings, daß die Nuttiefe über die ganze Länge der Nut sehr präzise eingehalten wird. Entsprechendes gilt für Platten aus einem Verbundwerkstoff, beispielsweise aus einem Kunststoffmaterial, dem Mineralstoffe beigefügt wurden. Derartige Verbundwerkstoffe lassen sich ebenfalls nur schlecht biegen, wobei dann nur große Biegeradien erzielt werden können. Selbst kleine Biegeradien lassen sich jedoch erzielen, indem die Verbundplatten zunächst mit einer sehr präzisen Nut versehen werden, wie dies voranstehend bereits bei Mehrschichtplatten erläutert wurde.

Von Vorteil ist es, wenn man in Vorschubrichtung des Fräsaggregats unmittelbar vor der Tastrolle befindliche Späne mittels einer Luftdüse aus dem Anlagebereich der Tastrolle entfernt. Auf diese Weise kann zuverlässig verhindert werden, daß auf der werkstückoberseite aufliegende Späne die Positionierung der auf der Werkstückoberseite abrollenden Tastrolle und damit der Frässcheibe beeinflussen. Durch das Entfernen der Späne kann reproduzierbar eine besonders präzise Nut gefräst werden.

Die Entfernung der Späne kann dadurch erfolgen, daß diese mittels eines Saugaggregats abgesaugt werden. Als besonders zuverlässig hat sich eine Vorgehensweise herausgestellt, bei der die Späne mittels einer Blasdüse entfernt werden, das heißt sie werden aus dem Anlagebereich der Tastrolle mittels einer Luftströmung weggeblasen. Hierbei ist es besonders günstig, wenn die weggeblasenen Späne anschließend abgesaugt werden.

Der Erfindung liegt außerdem die Aufgabe zugrunde, eine Bearbeitungsmaschine der eingangs genannten Art zur Durchführung des Verfahrens bereitzustellen.

Diese Aufgabe wird bei einer gattungsgemäßen Bearbeitungsmaschine dadurch gelöst, daß das Fräsaggregat senkrecht zur Bearbeitungsebene während des Einbringens einer Nut kontinuierlich verschiebbar am Bearbeitungskopf gehalten ist und daß der Frässcheibe eine auf dem Werkstück abrollbare Tastrolle zur Führung des Fräsaggregats zugeordnet ist, wobei die Frässcheibe im Anlagebereich der Tastrolle an das Werkstück um die Nuttiefe über den Rand der Tastrolle übersteht

Bei einer derartigen Bearbeitungsmaschine kann das Fräsaggregat mittels üblicher Antriebselemente parallel zur Bearbeitungsebene entlang vorgebbarer Koordinaten verfahren werden. Die Positionierung des Fräsaggregats senkrecht zur Bearbeitungsebene wird durch die auf dem Werkstück abrollende Tastrolle vorgegeben, so daß das Fräsaggregat in sehr präzisem Abstand zur Werkstückoberseite verfahren werden kann.

Da die Frässcheibe über die Tastrolle übersteht, wird durch den Abstand des äußeren Rands der Frässcheibe vom entsprechenden Rand der Tastrolle die Nuttiefe präzise vorgegeben.

Günstig ist es, wenn der im Anlagebereich der Tastrolle an das Werkstück vorliegende Überstand der Frässcheibe über den Rand der Tastrolle einstellbar ist. Dies ermöglicht den Einsatz einer Tastrolle für unterschiedliche Nuttiefen, indem der Abstand der Tastrolle im Anlagebereich an das Werkstück vom Außenrand der Frässcheibe entsprechend justiert wird.

Bei einer besonders bevorzugten Ausgestaltung derBearbeitungsmaschine ist vorgesehen, daß die Tastrolle einen an das Werkstück anlegbaren, frei verdrehbaren Tastring umfaßt, der quer zur Antriebsachse der Frässcheibe verstellbar gehalten ist. Die Positionierung der Drehachse der Tastrolle relativ zur Lage der Antriebsachse der Frässcheibe kann somit quer zur Bearbeitungsebene verändert werden. Dies ermöglicht es, auf einfache Weise den im Anlagebereich der Tastrolle an das Werkstück vorliegenden Überstand des Außenrands der Frässcheibe bezogen auf den Rand der Tastrolle zu verändern. Wird die Frässcheibe nachgeschliffen, so daß sich ihr Durchmesser verändert, so kann der Abstand des Außenrands der Frässcheibe zur Tastrolle dadurch nachgestellt werden, daß der Tastring relativ zur Frässcheibe entsprechend nachpositioniert wird. Eine derartige Nachpositionierung ermöglicht außerdem eine Anpassung der Nuttiefe an Werkstück-Dickentoleranzen.

Zur Erzielung einer besonders präzisen Nuttiefe ist es von Vorteil, wenn das Fräsaggregat eine auf den Anlagebereich der Tastrolle an das Werkstück gerichtete Luftdüse umfaßt. Mittels der Luftdüse kann im Anlagebereich der Tastrolle an das Werkstück eine Luftströmung erzeugt werden zur Entfernung von auf der Werkstückoberseite aufliegenden Spänen.

Hierbei ist es besonders günstig, wenn die Luftdüse als Blasdüse ausgestaltet, die über eine Druckleitung an eine Druckluftquelle anschließbar ist.

Bei einer besonders bevorzugten Ausgestaltung der erfindungsgemäßen Bearbeitungsmaschine ist vorgesehen, daß das Fräsaggregat eine die Frässcheibe und die Tastrolle umgebende Absaughaube umfaßt, die über eine Saugleitung mit einem Saugaggregat in Strömungsverbindung steht.

Beim Fräsen anfallende Späne können somit zuverlässig abgesaugt werden. Hierbei ist es besonders günstig, wenn die Absaughaube den Mündungsbereich der Blasdüse umgibt. Anfallende Späne können mittels der Blasdüse aus dem Anlagebereich der Tastrolle entfernt werden, wobei gleichzeitig aufgrund der Absaugdüse sichergestellt wird, daß diese anschließend über die Saugleitung abgesaugt werden.

Wie bereits voranstehend erläutert, eignet sich die Bearbeitungsmaschine insbesondere zum präzisen Fräsen einer vorzugsweise V- oder U-förmigen Nut in eine Mehrschichtplatte, die mindestens zwei Schichten mit unterschiedlicher Biegesteifigkeit umfaßt, oder auch in Verbundstoffplatten. Bei Mehrschichtplatten kann in die biegesteifere Schicht eine Nut eingefräst werden, so daß anschließend die Mehrschichtplatte im Bereich der eine geringere Biegesteifigkeit aufweisenden Schicht von Hand verformt werden kann. Es eignen sich hierzu insbesondere Mehrschichtplatten mit einer Zwischenschicht und mit Deckschichten, die die Ober- und Unterseiten der Zwischenschicht überdecken, wobei die Zwischenschicht eine höhere Biegesteifigkeit aufweist als die Deckschichten. So kann beispielsweise vorgesehen sein, daß die Zwischenschicht aus einem Kunststoffmaterial oder einem Material auf mineralischer Basis gefertigt ist. Für die Deckschicht kann vorzugsweise eine Metallschicht, insbesondere eine Aluminiumschicht, zum Einsatz kommen.

Die nachfolgende Beschreibung einer bevorzugten Ausführungsform der Erfindung dient im Zusammenhang mit der Zeichnung der näheren Erläuterung. Es zeigen:
- Figur 1:: eine schematische, schaubildliche Darstellung einer Bearbeitungsmaschine mit einem Fräsaggregat;
- Figur 2:: eine schematische, schaubildliche Ansicht des Fräsaggregats schräg von unten; und
- Figur 3:: eine schematische, schaubildliche Ansieht des Fräsaggregats schräg von oben.

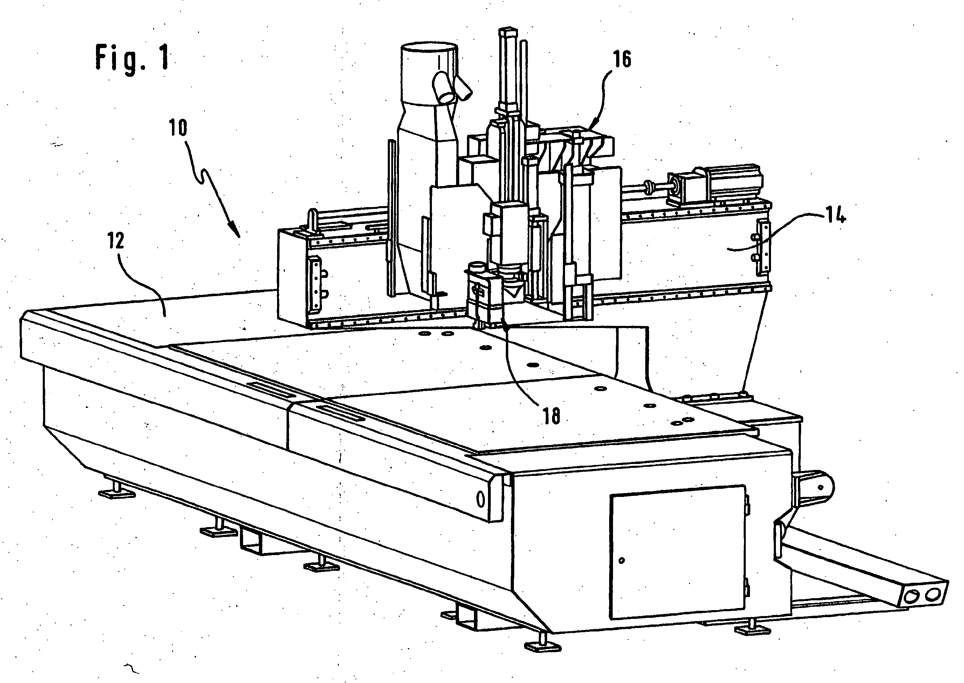

In Figur 1 ist in schematischer Darstellung eine insgesamt mit dem Bezugszeichen 10 belegte Bearbeitungsmaschine dargestellt zur horizontalen Bearbeitung plattenförmiger Werkstücke. Derartige Bearbeitungsmaschinen kommen insbesondere in Form sogenannter CNC-gesteuerter Bearbeitungszentren zum Einsatz, die eine reproduzierbare Bearbeitung beispielsweise von Holz- oder Kunststoffplatten erlauben.

Die Bearbeitungsmaschine 10 umfaßt einen Auflagetisch 12, auf dem das zu bearbeitende Werkstück in einer horizontalen Bearbeitungsebene ausgerichtet werden kann. Mittels in der Zeichnung nicht dargestellter, an sich bekannter Spannvorrichtungen, beispielsweise mittels Vakuumsauger, kann das Werkstück auf dem Auflagetisch 12 zuverlässig fixiert werden.

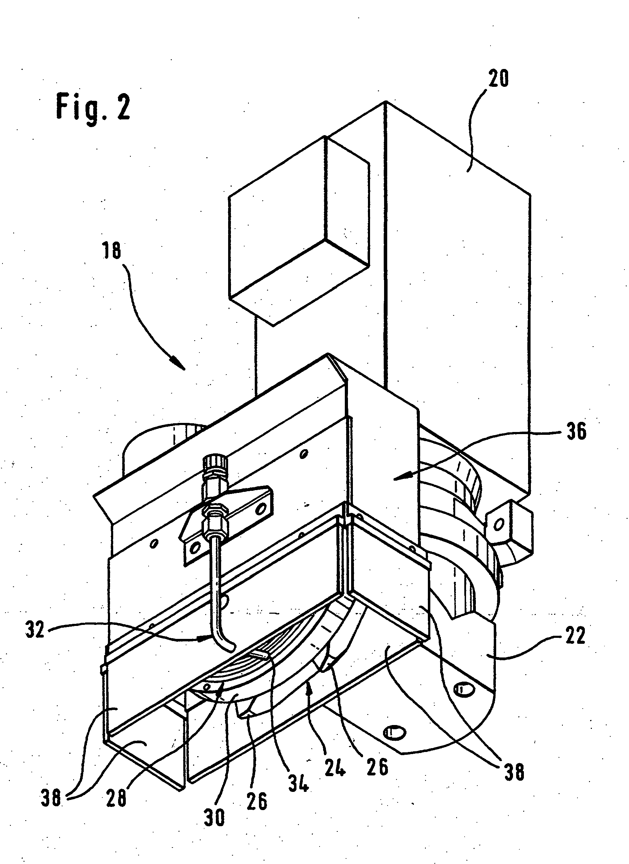

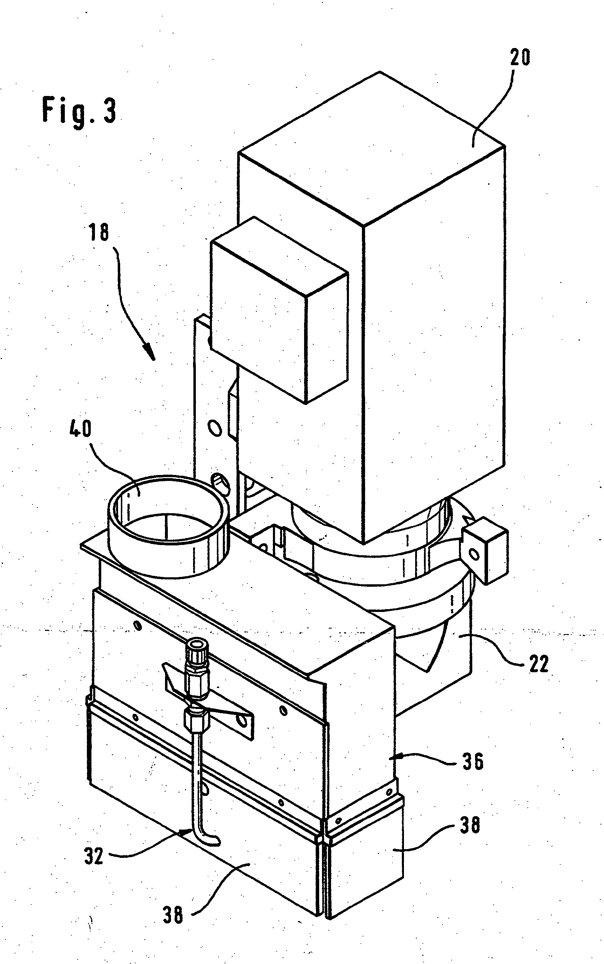

An dem Auflagetisch 12 ist in dessen Längsrichtung verfahrbar ein Ausleger 14 gehalten, der in Querrichtung des Auflagetischs 12 verfahrbar einen Bearbeitungskopf 16 trägt. An dem Bearbeitungskopf 16 wiederum ist quer zu der durch den Auflagetisch 12 definierten Bearbeitungsebene ein in den Figuren 2 und 3 vergrößert dargestelltes Fräsaggregat 18 gehalten.

Die Bearbeitungsmaschine 10 umfaßt eine in der Zeichnung nicht dargestellte, an sich bekannte programmierbare Steuerungseinheit sowie Antriebsaggregate zum Verfahren des Auslegers 14 und des Bearbeitungskopfs 16, so daß das Fräsaggregat 18 entlang vorgebbarer Koordinaten parallel zur Bearbeitungsebene verfahren werden kann.

Wie insbesondere aus den Figuren 2 und 3 deutlich wird, umfaßt das Fräsaggregat 18 einen von der Steuereinheit ansteuerbaren Antriebsmotor 20, dessen Motorwelle senkrecht zur Bearbeitungsebene ausgerichtet ist.

Über ein Umlenkgetriebe 22 ist an die Motorwelle eine parallel zur Bearbeitungsebene ausgerichtete Antriebswelle für eine Frässcheibe 24 gekoppelt, die am dem Umlenkgetriebe 22 abgewandten, freien Ende der Antriebswelle lösbar gehalten ist. Die Frässcheibe 24 umfaßt in bekannter Weise mehrere, gleichmäßig über ihren Umfang verteilt angeordnete Fräsmesser 26.

An dem dem Umlenkgetriebe 22 abgewandten freien Ende der Antriebswelle ist zusätzlich zur Frässcheibe 24 und parallel zu dieser ausgerichtet eine Tastrolle 28 lösbar gehalten. Diese umfaßt in ihrem radial außenliegenden Bereich einen Tastring 30, der um eine parallel zur Antriebsachse der Frässcheibe 24 ausgerichtete Drehachse frei verdrehbar ist und der quer zur Bearbeitungsebene verstellbar gehalten ist.

Zur Bearbeitung eines auf dem Auflagetisch 12 aufliegenden Werkstücks kann das Fräsaggregat 18 so weit nach unten in Richtung auf den Auflagetisch 12 verschoben werden, daß der Tastring 30 auf der dem Fräsaggregat 18 zugewandten Oberseite des Werkstücks aufliegt. Anschließend kann das Fräsaggregat 18 zum Fräsen einer Nut parallel zur Bearbeitungsebene verfahren werden. Hierbei rollt sich der frei verdrehbare Tastring 30 auf der Werkstückoberseite ab. Da das Fräsaggregat 18 quer zur Bearbeitungsebene frei verschiebbar am Bearbeitungskopf 16 gehalten ist, wird die Lage der Frässcheibe 24 relativ zum zu bearbeitenden Werkstück durch die Position des Tastrings 30 vorgegeben. Die Lage des Tastrings 30 zur Frässcheibe 24 wird derart eingestellt, daß die Fräsmesser 26 im Anlagebereich des Tastringes 30 an dem zu bearbeitenden Werkstück in radialer Richtung um die gewünschte Nuttiefe überstehen. Selbst bei von der durch den Auflagetisch 12 vorgegebenen Bearbeitungsebene abweichender Ausrichtung der Werkstückoberseite wird somit über die gesamte Länge der zu fräsenden Nut eine gleichbleibende Nuttiefe sichergestellt, denn die Positionierung der Frässcheibe 24 wird in der Richtung senkrecht zur Bearbeitungsebene nicht durch die Lage des Bearbeitungskopfs 16 vorgegeben, sondern durch den auf der Werkstückoberseite abrollenden Tastring 30

Um sicherzustellen, daß diePositionierung des Tastrings 30 nicht durch auf der Werkstückoberseite aufliegenden Späne beeinflußt wird, umfaßt das Fräsaggregat 18 eine Blasdüse 32, deren Mündungsbereich 34 dem Anlagebereich des Tastrings 30 an dem zu bearbeitenden Werkstück, das heißt der dem Auflagetisch 12 zugewandten Unterseite des Tastrings 30 unmittelbar benachbart angeordnet ist. Die Blasdüse 32 kann über eine in der Zeichnung nicht dargestellte Druckleitung, beispielsweise einen Druckschlauch, mit einer Druckluftquelle verbunden werden.

Der Mündungsbereich 34 der Blasdüse 32 ist ebenso wie die Tastrolle 28 und die Frässcheibe 24 von einer einseitig in Richtung auf den Auflagetisch 12 offenen Absaughaube 36 umgeben. Der untere Rand der Absaughaube 36 wird von Bürsten 38 definiert, die flexibel ausgebildet sind, um eine Beschädigung der Werkstückoberseite zu verhindern.

Auf ihrer dem Auflagetisch 12 abgewandten Oberseite trägt die Absaughaube 36 einen Rohrstutzen 40, an den eine an sich bekannte und deshalb in der Zeichnung aus Gründen einer besseren Übersichtlichkeit weggelassene flexible Saugleitung anschließbar ist, die mit einem in der Zeichnung ebenfalls nicht dargestellten Saugaggregat in Strömungsverbindung steht. Beim Fräsen anfallende Späne können somit mittels der Blasdüse 32 aus dem Anlagebereich des Tastrings 30 an dem Werkstück entfernt und anschließend über die Absaughaube 36 und die daran angeschlossene Saugleitung abgesaugt werden.

Mittels der Bearbeitungsmaschine 10 lassen sich insbesondere in Mehrschichtplatten mit einem Kern aus Kunststoff oder aus einem Material auf mineralischer Basis und mit Aluminium-Deckschichten Nuten mit sehr präziser Nuttiefe derart einfräsen, daß auf einer Seite der Mehrschichtplatten die Aluminium-Deckschicht zusammen mit einem sehr geringen Teil des Kunststoffkerns stehen bleiben. Die geringe Dicke des verbleibenden Materials ermöglicht dann ein Abkanten "von Hand". Eine Biegebank ist nicht erforderlich. Der Biegeradius wird hierbei durch die Nutform bestimmt. Hierbei kann insbesondere eine V-förmige Nut mit vorzugsweise unter einem Winkel von 90° oder 135° zueinander ausgerichteten Nutflanken zum Einsatz kommen oder auch eine rechteckförmige Nut. In entsprechender Weise eignet sich die Bearbeitungsmaschine 10 auch zum Fräsen von Verbundwerkstoffplatten, zum Beispiel von Platten aus Kunststoff, dem ein Mineralstoff beigefügt wurde, insbesondere Gesteinsmehl. Derartige Verbundwerkstoffe lassen sich ebenfalls üblicherweise nur mit großem Biegeradius abkanten. Werden sie jedoch - wie voranstehend erläutert - mit einer Nut mit präziser Nuttiefe versehen, so können selbst geringe Biegeradien durch Abkanten "von Hand" erzielt werden.

## Patentansprüche

1. Verfahren zum Fräsen einer Nut in ein plattenförmiges Werkstück mittels einer Bearbeitungsmaschine (10), wobei man das Werkstück zu dessen Halterung in einer Bearbeitungsebene auf einen im wesentlich horizontal ausgerichteten Auflagetisch (12) der Bearbeitungsmaschine auflegt und wobei man ein an einem Bearbeitungskopf (16) der Bearbeitungsmaschine gehaltenes Fräsaggregat verfährt und hierbei mittels einer um eine parallel zur Bearbeitungsebene ausgerichtete Antriebsachse rotierenden Frässcheibe (24) eine Nut in das Werkstück einfräst, **dadurch gekennzeichnet, daß** man das Fräsaggregat mittels einer der Frässcheibe zugeordneten, auf dem Werkstück abrollbaren Tastrolle (28) senkrecht zur Bearbeitungsrichtung führt.

2. Verfahren nach Anspruch 1, **dadurch gekennzeichnet, daß** man in Vorschubrichtung des Fräsaggregats unmittelbar vor der Tastrolle (28) befindliche Späne mittels einer Luftdüse (32) aus dem Anlagebereich der Tastrolle entfernt.

3. Verfahren nach Anspruch 2, **dadurch gekennzeichnet, daß** man zur Entfernung der Späne eine Blasdüse (32) verwendet.

4. Bearbeitungsmaschine (10) zur Durchführung des voranstehend genannten Verfahrens mit einem Auflagetisch (12) zur Halterung eines plattenförmigen Werkstücks in einer im wesentlichen horizontalen Bearbeitungsebene und mit einem parallel zur Bearbeitungsebene verfahrbaren Bearbeitungskopf (16), an dem ein Fräsaggregat (18) gehalten ist, wobei das Fräsaggregat eine um eine parallel zur Bearbeitungsebene ausgerichtete Antriebsachse rotierbare Frässcheibe (24) umfaßt zum Fräsen einer Nut in das Werkstück, **dadurch gekennzeichnet, daß** das Fräsaggregat (18) senkrecht zur Bearbeitungsebene während des Einbringens einer Nut kontinuierlich verschiebbar am Bearbeitungskopf (16) gehalten ist und daß der Frässcheibe (24) eine auf dem Werkstück abrollbare Tastrolle (28) zugeordnet ist zur Führung des Fräsaggregats, wobei die Frässcheibe (24) im Anlagebereich der Tastrolle (28) an das Werkstück um die Nuttiefe über den Rand der Tastrolle (28) übersteht.

5. Bearbeitungsmaschine nach Anspruch 4, **dadurch gekennzeichnet, daß** der im Anlagebereich der Tästrolle (28) an das Werkstück vorliegende Überstand der Frässcheibe (24) über den Rand der Tastrolle (28) einstellbar ist.

6. Bearbeitungsmaschine nach Anspruch 5, **dadurch gekennzeichnet, daß** die Tastrolle (28) einen an das Werkstück anlegbaren, frei verdrehbaren Tastring (30) umfaßt, der quer zur Antriebsachse der Frässcheibe (24) verstellbar gehalten ist.

7. Bearbeitungsmaschine nach Anspruch 4, 5 oder 6, **dadurch gekennzeichnet, daß** das Fräsaggregat (18) eine auf den Anlagebereich der Tastrolle (28) an das Werkstück gerichtete Luftdüse (32) umfaßt.

8. Bearbeitungsmaschine nach Anspruch 7, **dadurch gekennzeichnet, daß** die Luftdüse als Blasdüse (32) ausgebildet ist, die über eine Druckleitung an eine Druckluftquelle anschließbar ist.

9. Bearbeitungsmaschine nach einem der Ansprüche 4 bis 8, **dadurch gekennzeichnet, daß** das Fräsaggregat (18) eine die Frässcheibe (24) und die Tastrolle (28) umgebende Absaughaube (36) umfaßt, die über eine Saugleitung mit einem Saugaggregat in Strömungsverbindung steht.

10. Bearbeitungsmaschine nach Anspruch 9, **dadurch gekennzeichnet, daß** die Absaughaube (36) den Mündungsbereich (34) der Blasdüse (32) umgibt.

11. Verwendung einer Bearbeitungsmaschine (10) nach einem der Ansprüche 4 bis 10 zum Fräsen einer Nut in eine Mehrschichtplatte, die zumindest zwei Schichten mit unterschiedlicher Biegesteifigkeit umfaßt.

12. Verwendung nach Anspruch 11, wobei die Mehrschichtplatte eine Zwischenschicht und Deckschichten umfaßt, die die Ober- und Unterseite der Zwischenschicht überdecken, wobei die Zwischenschicht eine höhere Biegesteifigkeit als die Deckschichten aufweist.

13. Verwendung einer Bearbeitungsmaschine (10) nach einem der Ansprüche 4 bis 10 zum Fräsen einer Nut in eine Verbundwerkstoffplatte.

14. Verwendung nach Anspruch 13, **dadurch gekennzeichnet, daß** der Verbundwerkstoff ein Kunststoffmaterial umfaßt, dem ein Mineralstoff beigemischt ist.

## Claims

1. Method for the milling of a groove into a board-like workpiece by means of a processing machine (10), wherein the workpiece is placed on a supporting table (12) of the processing machine aligned essentially horizontal for holding said workpiece in a machining plane and wherein a milling unit held on a machining head (16) of the processing machine is displaced and a groove is thereby milled into the workpiece by means of a milling disk (24) rotating about a drive shaft aligned parallel to the machining plane, **characterized in that** the milling unit is guided at right angles to the direction of machining by means of a touch roller (28) associated with the milling disk and adapted to roll on the workpiece.

2. Method as defined in claim 1, **characterized in that** chips located immediately in front of the touch roller (28) in the advancing direction of the milling unit are removed from the contact area of the touch roller by means of an air nozzle (32).

3. Method as defined in claim 2, **characterized in that** a blast nozzle (32) is used to remove the chips.

4. Processing machine (10) for carrying out the method specified above with a supporting table (12) for holding a board-like workpiece in an essentially horizontal machining plane and with a machining head (16) displaceable parallel to the machining plane, a milling unit (18) being held on said head, wherein the milling unit comprises a milling disk (24) rotatable about a drive shaft aligned parallel to the machining plane for milling a groove into the workpiece, **characterized in that** the milling unit (18) is held on the machining head (16) so as to be continuously displaceable at right angles to the machining plane during the introduction of a groove and that a touch roller (28) adapted to roll on the workpiece is associated with the milling disk (24) for guiding the milling unit, wherein the milling disk (24) projects beyond the edge of the touch roller (28) by the depth of the groove in the contact area of the touch roller (28) on the workpiece.

5. Processing machine as defined in claim 4, **characterized in that** the projection of the milling disk (24) beyond the edge of the touch roller (28) in the contact area of the touch roller (28) on the workpiece is adjustable.

6. Processing machine as defined in claim 5, **characterized in that** the touch roller (28) comprises a freely rotatable touch ring (30) adapted to abut on the workpiece, said ring being held so as to be adjustable transversely to the drive shaft of the milling disk (24).

7. Processing machine as defined in claim 4, 5 or 6, **characterized in that** the milling unit (18) comprises an air nozzle (32) directed onto the contact area of the touch roller (28) on the workpiece.

8. Processing machine as defined in claim 7, **characterized in that** the air nozzle is designed as a blast nozzle (32) adapted to be connected to a source of compressed air via a pressure line.

9. Processing machine as defined in any one of claims 4 to 8, **characterized in that** the milling unit (18) comprises a suction hood (36) surrounding the milling disk (24) and the touch roller (28), said hood being in flow communication with a suction unit via a suction line.

10. Processing machine as defined in claim 9, **characterized in that** the suction hood (36) surrounds the mouth area (34) of the blast nozzle (32).

11. Use of a processing machine (10) as defined in any one of claims 4 to 10 for the milling of a groove into a multilayered board comprising at least two layers with different flexural rigidities.

12. Use as defined in claim 11, wherein the multilayered board comprises an intermediate layer and cover layers covering the upper and lower sides of the intermediate layer, wherein the intermediate layer has a greater flexural rigidity than the cover layers.

13. Use of a processing machine (10) as defined in any one of claims 4 to 10 for the milling of a groove into a composite material board.

14. Use as defined in claim 13, **characterized in that** the composite material comprises a plastic material with a mineral substance mixed with it.

## Revendications

1. Procédé de fraisage d'une rainure dans une pièce en forme de plaque au moyen d'une machine d'usinage (10), ladite pièce étant posée sur une table de support (12), orientée sensiblement horizontalement, de la machine d'usinage pour le maintien la pièce dans un plan d'usinage, et une unité de fraisage, supportée au niveau d'une tête d'usinage (16) de la machine d'usinage, étant déplacée et réalisant ainsi le fraisage d'une rainure dans la pièce au moyen d'un disque de fraisage (24) tournant autour d'un axe d'entraînement orienté parallèlement au plan d'usinage, **caractérisé en ce que** l'unité de fraisage est guidée perpendiculairement à la direction d'usinage au moyen d'un galet palpeur (28) associé au disque de fraisage et apte à rouler sur la pièce.

2. Procédé selon la revendication 1, **caractérisé en ce que** les copeaux se trouvant juste en avant du galet palpeur (28), par référence au sens de progression de l'unité de fraisage, sont éloignés de la zone d'appui du galet palpeur au moyen d'une buse d'air (32).

3. Procédé selon la revendication 2, **caractérisé en ce que** l'on utilise une buse soufflante (32) pour éloigner les copeaux.

4. Machine d'usinage (10) destinée à mettre en oeuvre le procédé susmentionné, ladite machine d'usinage comportant une table de support (12) destinée à maintenir une pièce en forme de plaque dans un plan d'usinage sensiblement horizontal, et une tête d'usinage (16) qui peut être déplacée parallèlement au plan d'usinage et qui supporte l'unité de fraisage (18), l'unité de fraisage comportant un disque de fraisage (24) apte à tourner autour d'un axe d'entraînement orienté parallèlement au plan d'usinage afin de fraiser une rainure dans la pièce, **caractérisée en ce que** l'unité de fraisage (18) est supportée par la tête d'usinage (16) de façon être continûment déplaçable perpendiculairement au plan d'usinage pendant la réalisation d'une rainure, et **en ce qu'**un galet palpeur (28), apte à rouler sur la pièce, est associé au disque de fraisage (24) afin de guider l'unité de fraisage, le disque de fraisage (24) saillant, de la profondeur de la rainure, au-dessus du bord du galet palpeur (28) dans la zone d'appui du galet palpeur (28) contre la pièce.

5. Machine d'usinage selon la revendication 4, **caractérisée en ce que** la position saillante du disque de fraisage (24) au-dessus du bord du galet palpeur (28), dans la région d'appui du galet palpeur (28) contre la pièce, est réglable.

6. Machine d'usinage selon la revendication 5, **caractérisée en ce que** le galet palpeur (28) comporte un anneau palpeur (30) qui est librement mobile en rotation, qui peut porter contre la pièce, et qui est supporté de façon à être réglable transversalement à l'axe d'entraînement du disque de fraisage (24).

7. Machine d'usinage selon la revendication 4, 5 ou 6, **caractérisée en ce que** l'unité de fraisage (18) comporte une buse d'air (32) dirigée vers la zone d'appui du galet palpeur (28) contre la pièce.

8. Machine d'usinage selon la revendication 7, **caractérisée en ce que** la buse d'air est conformée en buse soufflante (32) qui peut être raccordée à une source d'air comprimé par une conduite d'alimentation.

9. Machine d'usinage selon l'une des revendications 4 à 8, **caractérisée en ce que** l'unité de fraisage (18) comporte un capot d'aspiration (36) qui entoure le disque de fraisage (24) et le galet palpeur (28), et qui est en liaison d'écoulement avec une unité d'aspiration au moyen d'une conduite d'aspiration.

10. Machine d'usinage selon la revendication 9, **caractérisée en ce que** le capot d'aspiration (36) entoure la région d'embouchure (34) de la buse soufflante (32).

11. Utilisation d'une machine d'usinage (10) selon l'une des revendications 4 à 10 pour fraiser une rainure dans une plaque multicouche qui comporte au moins deux couches de différentes raideurs à la flexion.

12. Utilisation selon la revendication 11, dans laquelle la plaque multicouche comporte une couche intermédiaire et des couches de revêtement qui recouvrent la face supérieure et la face inférieure de la couche intermédiaire, ladite couche intermédiaire ayant une raideur à la flexion qui est supérieure à celle des couches de revêtement.

13. Utilisation d'une machine d'usinage (10) selon l'une des revendications 4 à 10 pour fraiser une rainure dans une plaque de matériau composite.

14. Utilisation selon la revendication 13, **caractérisée en ce que** le matériau composite est une matière plastique additionnée d'une matière minérale.
